# EUROPEAN PATENT APPLICATION

(11) **EP 2 745 883 A1**
(43) Date of publication of application: **25.06.2014**
(21) Application number: 12825786.2
(22) Date of filing: 27.07.2012
(51) Int. Cl.: A63B 67/18

(54) **ARTIFICIAL FEATHER FOR SHUTTLECOCK, SHUTTLECOCK, AND METHOD FOR PRODUCING ARTIFICIAL FEATHER FOR SHUTTLECOCK**

(30) Priority: 19.08.2011 JP 2011179801
(71) Applicant: Yonex Kabushiki Kaisha, Tokyo 113-8543 (JP)
(72) Inventor: YONEYAMA, Wataru, Soka-shi Saitama 340-0021 (JP)
(74) Representative: Heine, Christian Klaus
(86) International application number: PCT/JP2012/069120
(87) International publication number: WO 2013/027535

(57) **Abstract**

An artificial feather for a shuttlecock including: a sheet form vane portion; and a rachis portion supporting the vane portion, the rachis portion being made of resin including glass fiber and carbon nanotube.

## Description

### [Technical Field]

The present invention relates to an artificial feather for shuttlecocks, a shuttlecock, and a method of manufacturing artificial feather for a shuttlecock.

### [Background Art]

As badminton shuttlecocks, there are those using waterfowl feather (natural feather) (natural feather shuttlecocks) and those using artificial feather (artificial feather shuttlecocks) artificially manufactured using nylon resin and the like, for the feathers.

As is well known, natural feather shuttlecocks have a structure using approximately 16 natural feathers of geese, ducks or the like, and the ends of the stems of the feathers are embedded into the hemispherical platform (base portion) made of cork covered with skin. The feather used for natural feather shuttlecocks have a feature of the specific gravity being small and being extremely light. For example, the specific gravity of the stem portion is approximately 0.4 and the vane portion is approximately 0.15. Additionally, feather has high rigidity and thereby a unique flying performance and comfortable impression when hitting natural feather shuttlecocks can be perceived.

However, the feather used as the material for natural feather shuttlecocks are collected from the aforementioned waterfowls and moreover, feathers of specific portions of the waterfowl are suitable for shuttlecocks which does not mean that feathers from any portion of the waterfowl can be used and thus the amount of feather for a shuttlecock that can be collected from one waterfowl is a miniscule number. In other words, there is a limit to the amount of feather manufactured for use in natural feather shuttlecocks. Further, there has been a situation of a large amount of geese, used for food that had been the main source for feather, being disposed due to bird flu epidemic in recent years. Therefore, material procurement is predicted to become more difficult and the price of natural feather shuttlecocks to rise further in the future.

Meanwhile, shuttlecocks with resin feather integrally formed in a ring shape is well known as artificial feather shuttlecocks, however, the feathers of these artificial feather shuttlecocks do not move independently as with natural feather shuttlecocks so that flight performance similar to natural feather shuttlecocks is difficult to be achieved. For such reason, artificial feather shuttlecocks imitating feather has been proposed as described in the following PTL 1 and 2.

### [Citation List]

### [Patent Literature]

[PTL 1]
   Japanese Patent Application Laid-open Publication No. 2008-206970
[PTL 2]
   Japanese Patent Application Laid-open Publication No. 59-69086

### [Summary of Invention]

### [Technical Problem]

The smaller the amount the shuttlecock presses down on the gut (string), the lighter the hitting impression of the shuttlecock is perceived to be and is highly evaluated. On the other hand, when the amount that the shuttlecock presses down on the gut becomes large, the hitting impression is perceived to be heavy and is evaluated badly.

In the case of shuttlecocks of the same weight, when the shuttlecock is hit (when the shuttlecock receives a force from the gut), not only the base portion but also the vane and the rachis contact the gut, therefore the amount that the shuttlecock presses down on the gut becomes small because the rachis has high rigidity and high repulsion, and the hitting impression becomes light. Assuming that the rachis has low rigidity and low repulsion, the amount that the shuttlecock presses down on the gut becomes large and the hitting impression becomes heavy.

The excellent hitting impression of the natural shuttlecock results from not only that the natural feathers are lightweight, but also that the rachises of the feathers are high in rigidity and high in repulsion. Therefore, the artificial feathers used in the artificial feather shuttlecocks are also required to be not only lightweight but also high in rigidity and high in repulsion in the rachis portion that corresponds to the rachis of natural feathers.

In PTL 1 and PTL 2, fiber reinforced resin is used as the material of the rachis portion of the artificial feather shuttlecock. But in the case that glass reinforced resin is used as the fiber reinforced resin, sufficient repulsion cannot be obtained and thus the hitting impression of the artificial shuttlecock falls short of the natural shuttlecock. On the other hand, in the case that reinforced resin using carbon fibers is adopted, when the carbon fibers are combined to a degree that sufficient hitting impression can be obtained (to a degree that sufficient rigidity is obtained), the shuttlecock becomes easy to break, and there arises a problem in durability.

When the artificial feather shuttlecock is made flexible in order to improve durability, the shuttlecock becomes low in rigidity and in repulsion and thus sufficient hitting impression cannot be obtained. As described above, durability and hitting impression are mutually contradictory issues and it has been difficult to balance these issues.

The present invention provides improvement in hitting impression without loss of durability.

### [Solution to Problem]

A main aspect of the invention is an artificial feather for a shuttlecock including:
a sheet form vane portion; and a rachis portion supporting the vane portion,
the rachis portion being made of resin including glass fiber and carbon nanotube.

### [Advantageous Effects of Invention]

With the artificial feather for shuttlecocks of this invention, hitting impression can be improved without loss of durability.

Other features of the present invention will be made clear through the present specification with reference to the accompanying drawings.

### [Brief Description of Drawings]

[Fig. 1] Fig. 1 is a perspective view of an artificial feather shuttlecock seen from the side with a base portion.
[Fig. 2] Fig. 2 is a perspective view of the artificial feather shuttlecock seen from the side with an artificial feather.
[Fig. 3] Fig. 3 is a perspective view of the artificial feather.
[Fig. 4] Figs. 4A to 4C are explanatory views of a modified example of an artificial feather 10. Fig. 4A is a plan view of the artificial feather 10 of the modified example seen from the front side. Fig. 4B is a plan view of the artificial feather 10 of the modified example seen from the back side. Fig. 4C is a view of the artificial feather 10 of the modified example seen from the upper side.
[Fig. 5] Fig. 5 is a view showing a part of a skirt portion 4 configured with the artificial feathers 10 of the modified example seen from above.
[Fig. 6] Fig. 6 is a chart showing materials and evaluation results of samples.
[Fig. 7] Fig. 7A is a photograph taken of a comparison sample A. Fig. 7B is a photograph taken of sample C.
[Fig. 8A] Figs. 8A and 8B are photomicrographs showing sections of a rachis portion of sample B. Fig. 8A is a photomicrograph of a section, and Fig. 8B is a photomicrograph of a surface after a part has been partially melted with a solvent.

### [Mode for Carrying Out the Invention]

### === Summary ===

From the description in this specification and the drawings, at least the below matters will become clear.

An aspect of the present invention is an artificial feather for a shuttlecock including:
a sheet form vane portion; and a rachis portion supporting the vane portion,
the rachis portion being made of resin including glass fiber and carbon nanotube.

With such an artificial feather for shuttlecocks, the artificial feather that improves the hitting impression can be realized without loss of durability.

The rachis portion is preferably put in between at least two sheet form members including the vane portion. In this way, the portion that is visible as black can be decreased, and the visibility of the artificial feather shuttlecock improves.

The carbon nanotube preferably includes a functional group. The carbon nanotube preferably includes at least one of a carboxyl group and a hydroxyl group as the functional group. With such an artificial feather for shuttlecocks, further improvement in hitting impression can be obtained.

The content of the carbon nanotube in the resin preferably includes the glass fiber and the carbon nanotube is equal to or less than 0.4 weight%. With such artificial feather for shuttlecocks, the artificial feather that improves hitting impression can be realized without loss of durability.

Another aspect of this invention is a shuttlecock including: a base portion; and a plurality of artificial feathers arranged circularly to the base portion, wherein
the artificial feather includes a sheet form vane section and a rachis portion supporting the vane portion,
the rachis portion being formed with resin including glass fiber and carbon nanotube.

With such shuttlecock, hitting impression can be improved without loss of durability.

Another aspect of this invention is a manufacturing method of an artificial feather for a shuttlecock including a sheet from vane portion and a rachis portion supporting the vane portion,
the rachis portion being formed with resin including glass fiber and carbon nanotube.

With such manufacturing method, the artificial feather with good hitting impression can be manufactured without loss of durability.

The method preferably including:
preparing a first masterbatch combined with the glass fiber;
preparing a second masterbatch combined with the carbon nanotube; and
forming resin including the glass fiber and the carbon nanotube by mixing the first masterbatch, the second masterbatch, and resin not including the glass fiber and the carbon nanotube. In this way, carbon nanotubes together with glass fibers can be dispersed well in the resin.

### == Structure of artificial feather shuttlecocks ==

### <Basic structure of artificial feather shuttlecocks>

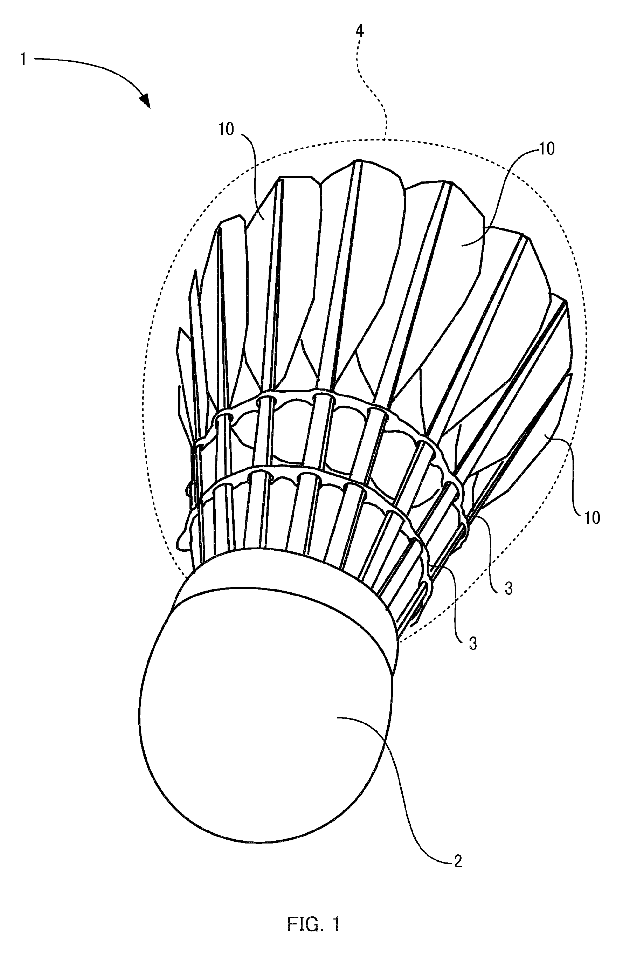

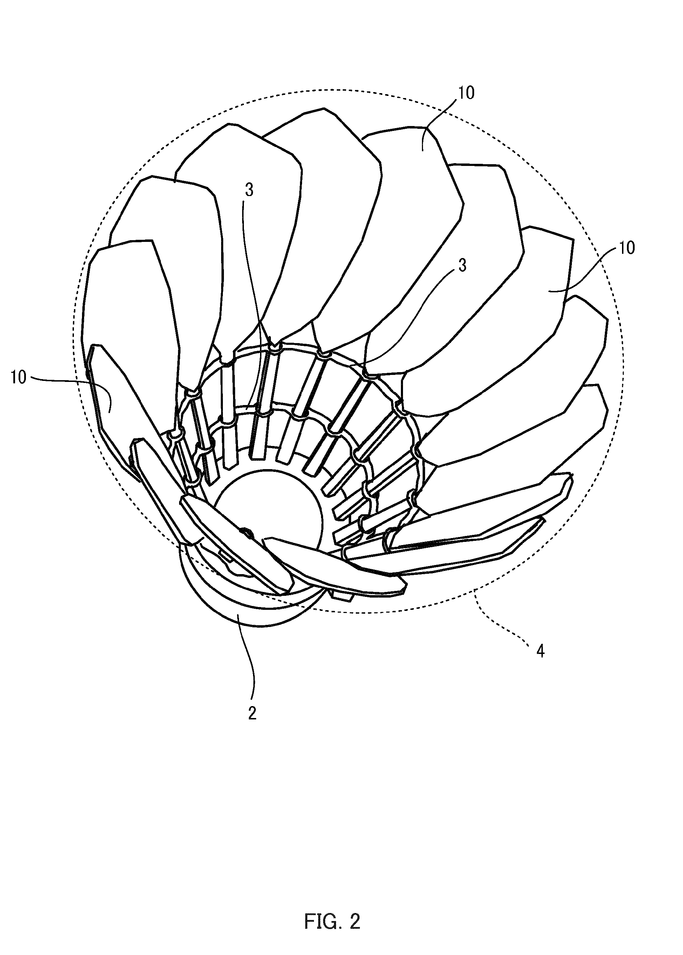

Figs. 1 and 2 show external views of an artificial feather shuttlecock 1 including an artificial feather 10. Fig. 1 is a perspective view of the artificial feather shuttlecock 1 seen from the side with the base portion 2. Fig. 2 is a perspective view of the artificial feather shuttlecock 1 seen from the side with the artificial feather 10.

The artificial feather shuttlecock 1 includes the base portion 2, a plurality of artificial feathers 10 imitating natural feather, and string like members 3 that are for fixing the artificial feathers 10 to each other. The base portion 2 is made by, for example, covering a thin skin on a cork platform. The shape of the base portion 2 is a hemispherical shape with a diameter of 25mm to 28mm, and the base portion 2 has a flat surface. Along the circumference of this flat surface the roots of the plurality of the artificial feathers 10 are embedded circularly. The plurality of the artificial feathers 10 are arranged so that the spaces in between them become wider the further away from the base portion 2. In this way, the skirt portion 4 is formed with the plurality of the artificial feathers 10. The plurality of the artificial feathers 10 are fixed to each other with the string like members 3 (for example, cotton strings).

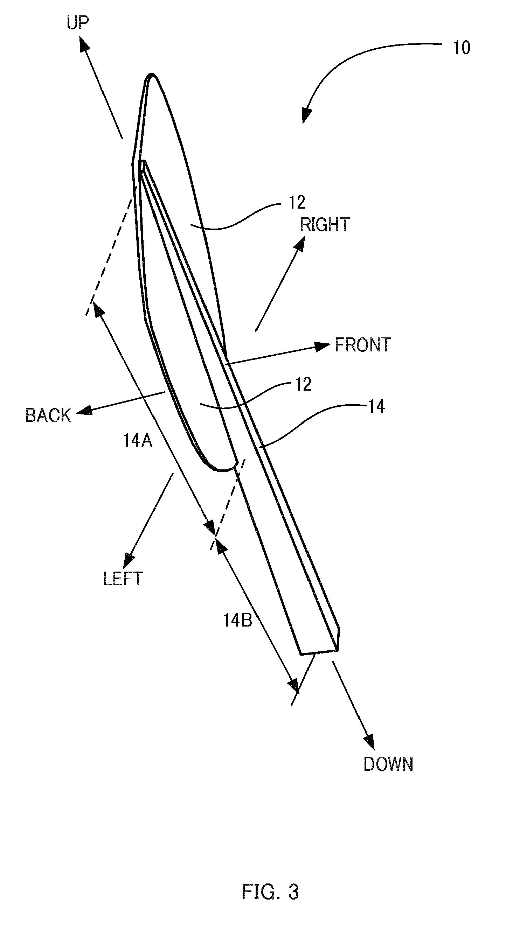

Fig. 3 is an external view of the artificial feather 10.

The artificial feather 10 includes the vane portion 12 and the rachis portion 14. The vane portion 12 is a part corresponding to a vane of a natural feather, and the rachis portion 14 is a part corresponding to a rachis of a natural feather. In the figure, the up-down direction is defined along the rachis portion 14, and the side with the vane portion 12 is defined as up and the opposite side is defined as down. In the figure, the left-right direction is defined along a direction in which the vane portion 12 extends from the rachis portion 14. In the figure, the front and back are defined based on a state in which the artificial feathers 10 are attached to the base portion 2. Below, each of the components is described in accordance with up-down, left-right, front-back as defined in the drawing.

The vane portion 12 is a sheet form member imitating the shape of the vane of a natural feather. The vane portion 12 can be made with for example, a nonwoven cloth or resin and the like. In this embodiment, a nonwoven cloth that can reproduce the outer shape of a natural feather by cutting is used. In this embodiment, to prevent the fiber of the nonwoven cloth from becoming loose when hitting, a reinforcing film is formed on the surface of the vane portion 12. The reinforcing film can be formed by applying resin, and various applying methods, for example, dipping, spraying, roll coating, and the like can be used. The reinforcing film can be formed on one side or on both sides of the vane portion 12. The reinforcing film can be formed on an entire surface or on one part of the vane portion 12.

The rachis portion 14 is an elongated member imitating the rachis shape of a natural feather, and the rachis portion is a member that supports the vane portion 12. The rachis portion 14 includes a vane supporting portion 14A that supports an area from an upper end to a lower end of the vane portion 12 and a calamus portion 14B that protrudes from the vane portion 12. The calamus portion 14B is a portion corresponding to a calamus (calamus: this section is also sometimes called as quill) of a natural feather. The lower end of the calamus portion 14B is embedded in the base portion 2 and fixed to the base portion 2. The material of the rachis portion 14 is to be described later.

The rachis portion 14 in the figure is shown having a quadrangle cross section shape. The cross section shape of the rachis portion 14, however, may be a rhombus, a circular shape, or an oval shape. In order to increase the strength of the rachis portion 14, the cross section shape of the rachis portion 14 can be made as a shape with one part protruding out such as a T shape or a cross shape. The cross section shape of the rachis portion 14 may be different in the up-down direction so that, for example, the upper side is a circular shape and the lower side is a quadrangle shape.

The rachis portion 14 in the figure is formed so that its cross section shape becomes larger as it gets nearer to the lower side. The size of the cross section shape in the up-down direction can be the same without changing, and the size of the cross section shape may change smoothly.

In the drawing, the vane portion 12 is supported in the back side of the vane supporting portion 14A. The vane portion 12 may be supported in the front side of the vane supporting portion 14A, however. The vane portion 12 may be made of two sheets, and the two vane portions 12 may sandwich the vane supporting portion 14A. The vane portion 12 may be provided buried inside the vane supporting portion 14A.

### < Modified Structure of Artificial Feather >

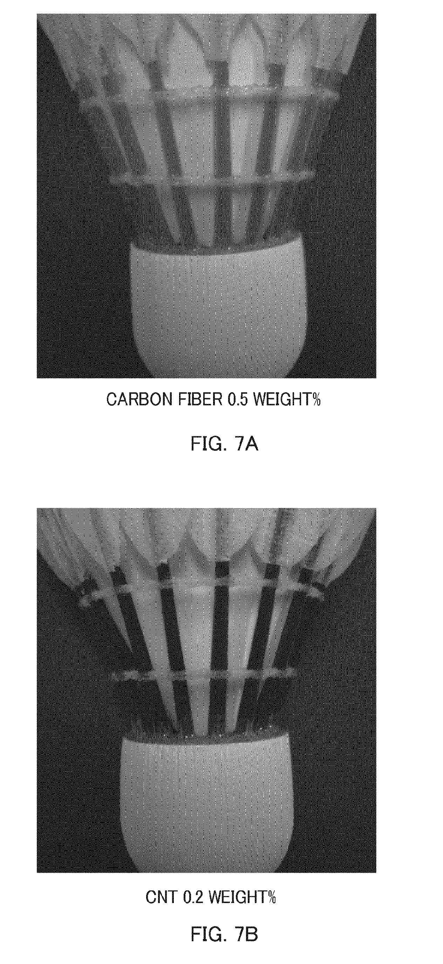

As will be described later, resin including glass fibers and carbon nanotubes becomes black (refer to Fig. 7B: even an extremely small amount of carbon nanotubes makes the resin black). In the case that the rachis portion 14 is formed using such black resin, when the vane portion 12 is supported in the back side of the vane supporting portion 14A as in Fig. 3, the entire black rachis portion 14 (both the vane supporting portion 14A and the calamus portion 14B) becomes visible, and as a result there is a possibility that the visibility of the artificial feather shuttlecock decreases.

By configuring the artificial feathers in a manner as will be described below, the black color of the vane supporting portion 14A can be made hard to see.

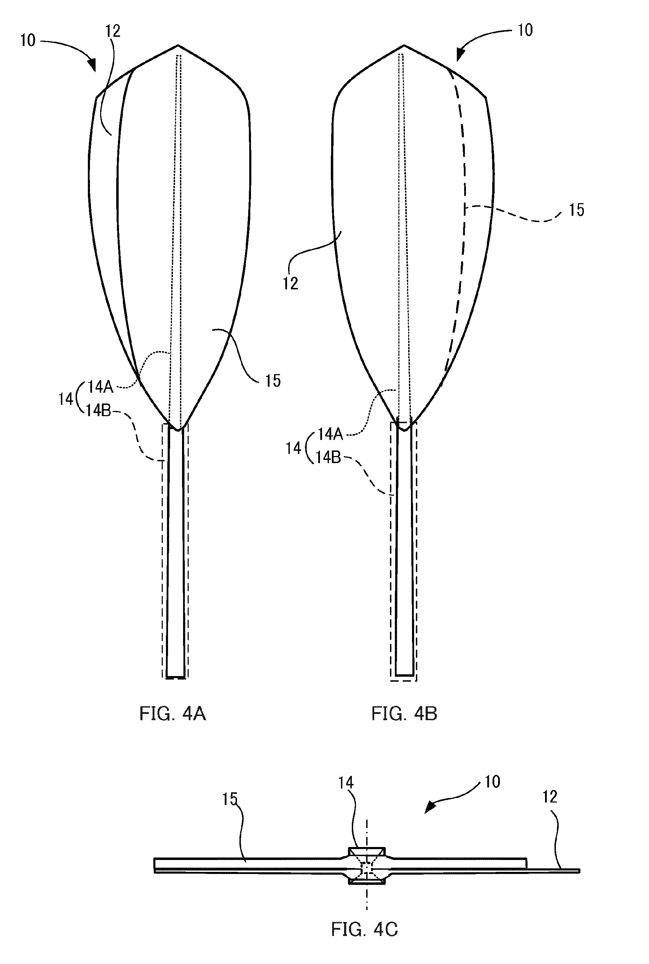

Figs. 4A to 4C are explanatory views of the modified example of the artificial feather 10. Fig. 4A is a plan view of the artificial feather 10 in the modified example seen from the front side. Fig. 4B is a plan view of the artificial feather 10 in the modified example seen from the back side. Fig. 4C is a view of the artificial feather 10 in the modified example seen from the upper side. Members that have already been described have the same reference numbers.

The artificial feather 10 in the modified example has the vane portion 12 and the rachis portion 14 and also a reinforcing material 15. The reinforcing material 15 is a sheet form member provided to the front side of the artificial feather 10 and is formed from a foam body (such as a foam polyethylene). The reinforcing material 15 is in a laminated state on the vane portions 12 and adhered with such as an adhesive or both sided adhesive tape. Regarding the front and back relationship of the artificial feather 10, the vane portion 12 may be arranged to the front side or the reinforcing material 15 may be arranged to the front side. In the modified example, with a laminated structure made of the vane portion 12 and the reinforcing material 15 made of a foam body, there is no loss of lightness, and even in the case the vane portion 12 is hit hard when hitting, such impact is absorbed by the reinforcing material 15, and the vane portion 12 can be prevented from breaking. In any case, the front-back relationship of the artificial feather 10 can be appropriately decided in compliance with demands for the shuttlecock as a product such as beautiful appearance and durability.

In the modified example, the vane supporting portion 14A of the rachis portion 14 is put between the sheet form vane portion 12 and the sheet form reinforcing material 15. In this way, even when the rachis portion 14 is made of a black material, the vane supporting portion 14A of the rachis portion 14 is hidden in between the vane portion 12 and the reinforcing material 15 and is difficult to see from the outside.

In other words, in this modified example, the portion that is visible as black is only the calamus portion 14B, and the portion that looks black compared with the artificial feather in Fig. 3 described above can be lessened. In this way, the artificial feather shuttlecock using the artificial feather 10 in the modified example can be improved in visibility compared with the artificial feather shuttlecock in Fig. 1 described above.

Here, by putting the vane supporting portion 14 of the rachis portion 14 between the vane portion 12 and the reinforcing material 15, the part of the rachis portion 14 that looks black is lessened. The part that looks black of the rachis portion 14 may be lessened, however, by putting the rachis portion 14 between the two vane portions 12. In this way, by putting the rachis portion 14 between at least two sheet form members including the vane portions 12, the part of the rachis portion 14 that looks black can be lessened.

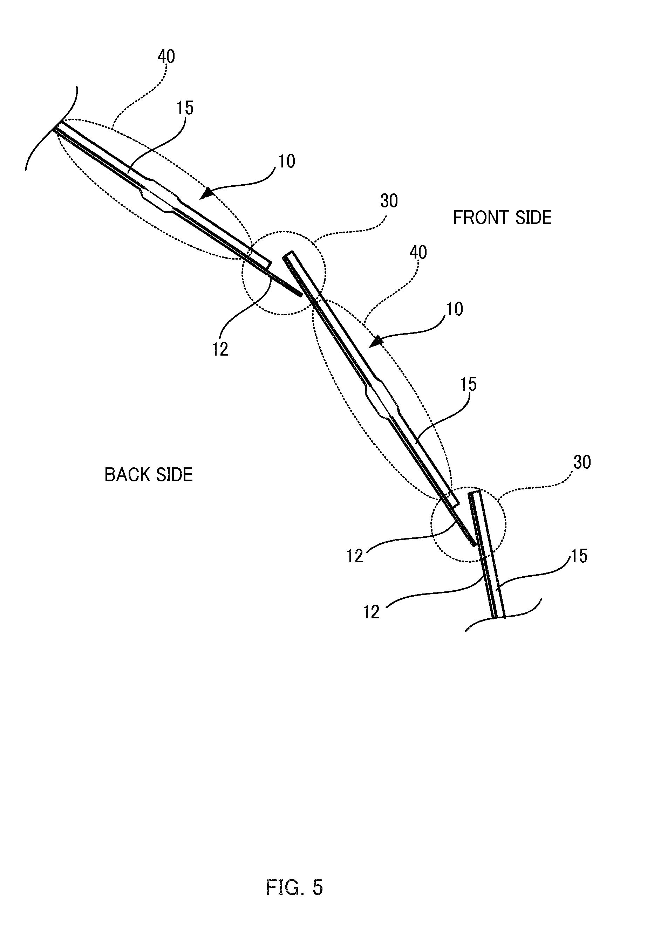

By the way, with the artificial feather 10 in the modified example, the reinforcing material has a flat shape with the edges chipped in parts overlapping with the vane portions 12 of the adjacent artificial feathers 10. The reason for this is to make the difference in thickness between the overlapping area 30 and the single area 40 small, as shown in Fig. 5, and to make the thickness of the skirt portion 4 as uniform as possible. By making the thickness of the skirt portion 4 as uniform as possible, there is an expectation that the flying performance and the flying path can be made similar to that of the natural feather shuttlecock.

### <Function required of Rachis Portion>

The material of the rachis portion 14 will be described later, and it is necessary for the rachis portion 14 to be lightweight. The reason for this is when the rachis portion 14 becomes heavy and the weight balance of the shuttlecock becomes imbalanced, the artificial feather shuttlecock will have a different flying performance from the natural feather shuttlecock, and also when the artificial shuttlecock 1 becomes heavy the amount that the artificial feather shuttlecock 1 presses down on the gut becomes large, and the impression when hitting becomes heavy (the hitting impression deteriorates).

The rachis portion 14 preferably has high rigidity and high force of repulsion. When hitting the shuttlecock (when the shuttlecock receives force from the gut), not only the base portion 2 but also the vane portions 12 and the rachis portion 14 contact the gut. Therefore, when the rachis portion 14 is high in rigidity and repulsion, the amount that the artificial feather shuttlecock 1 presses down on the gut becomes small, and the hitting impression becomes light (the hitting impression improves). Supposing that the rachis portion 14 is low in rigidity and repulsion, the amount that the shuttlecock presses down on the gut becomes large and the hitting impression becomes heavy (the hitting impression deteriorates).

The rachis portion 14 also requires durability. When the durability of the rachis portion 14 is low, the root (the rachis portion 14B near the flat surface of the base portion 2) of the rachis portion 14 becomes easy to break when the artificial feather shuttlecock 1 receives a strong impact force from the gut (string) like at the time of smashing. When the root of the rachis portion 14 breaks the artificial feather shuttlecock 1 cannot maintain the initial flying characteristic.

Therefore, the rachis portion 14 needs to be not only lightweight, but also have high rigidity and high force of repulsion and also maintain durability.

### === Material of Rachis portion 14===

Use of fiber reinforced resin as material of the rachis portion 14 is well known. In the case that glass reinforced resin is used as fiber reinforced resin, however, sufficient repulsion cannot be obtained, and its hitting impression is far from that of the natural feather shuttlecock. On the other hand, in the case of using reinforced resin using carbon fibers, when carbon fibers are combined to an extent that sufficient hitting impression is obtained (sufficient rigidity can be obtained), the rachis portion becomes easy to break and there arises a problem in durability.

In this embodiment, resin reinforced using glass fibers as well as carbon nanotubes (hereafter, referred to also as CNT) are used as material of the rachis portion 14.

With the rachis portion 14 being formed with resin including glass fibers and carbon nanotubes, the artificial feathers 10 will have high rigidity and high repulsion force, while maintaining durability. As a result, the artificial feather shuttlecock 1 having the artificial feathers 10 has durability as well as good hitting impressions.

In the case of combining the carbon fibers with the glass fibers in the resin, since the carbon fibers have generally a thickness of approximately 5 to 10 µm in diameter, unless a certain amount is combined they cannot be dispersed entirely in a uniform manner. With the combined grade of commercially available glass fibers and carbon fibers, carbon fibers are included by approximately 10%.

On the contrary, in the case of combining carbon nanotubes with glass fibers, in the aspect of durability which will be described later, use of a large amount of the carbon nanotubes will decrease durability, and therefore there is a need to use the carbon in a small amount in a dispersed manner. As a method of the above, by preparing a masterbatch combined with glass fibers (resin including a higher density of glass fibers than a final product), and a masterbatch with satisfactory dispersion of the carbon nanotubes (resin including a higher density of carbon nanotubes than a final product), and further mixing non-reinforced resin (resin not including glass fibers or carbon nanotubes), carbon nanotubes can be satisfactorily dispersed in the resin together with glass fibers.

Thus, the carbon nanotubes dispersed in the resin contribute to improving the repulsion of the resin. In comparison to a case in which carbon fiber is combined to an extent that sufficient hitting impression can be obtained, even when combined with an extremely small amount of carbon nanotube combination, the carbon nanotube could be well dispersed in the resin, and an effect of improvement in hitting impression is obtained.

A thermoplastic resin is used in a base material (matrix) of the resin combined with glass fibers and carbon nanotubes. As thermoplastic resin, for example, polyamide resin, polyamide elastomer, polyolefin elastomer and the like can be used. Specifically, such as polyamide 12 (nylon12, PA12) can be used.

The carbon nanotubes to be included in the resin together with the glass fibers can be such as cup stack carbon nanotubes (CS-CNT), multi-walled carbon nanotubes (MW-CNT), single walled carbon nanotubes (SW-CNT).

The carbon nanotubes to be included in the resin together with the glass fibers preferably include a functional group. The carbon nanotubes with the functional group is obtained by modifying the carbon nanotubes with the functional group. By combining the carbon nanotubes with the functional group in the resin, the cohesive strength between the resin and the carbon nanotubes increases, repulsion of the resin improves and the hitting impression improves.

By including the carbon nanotube with the functional group together with the glass fibers in the resin, a phenomenon that the carbon nanotubes come in contact (stick) to the periphery of the glass fibers occurs. This is considered to be, as a result of a cohesive stretch (including weak cohesive strength) working between the functional group of the carbon nanotube and the glass surface, the carbon nanotubes and the glass fibers coming into contact. For this reason, it is considered that repulsion of the carbon nanotubes is imparted to the glass fibers, and compared to the case in which carbon nanotubes without a functional group are combined with the glass fibers in the resin, when the carbon nanotubes with the function group are combined with the glass fibers in the resin, further improved effects in hitting impression can be obtained.

Therefore, the functional group of the carbon nanotube with the functional group is preferably a functional group with high polarity and that is compatible with glass. In other words, the functional group of the carbon nanotube with the functional group is preferably a functional group showing hydrophilicity. For example, the carbon nanotubes preferably include at least one of a carboxyl group and a hydroxyl group as the functional group. Other functional groups (for example, an amino group) may be used as long as it is a functional group that is compatible with glass.

The carbon nanotubes that are to be included in the resin are preferably cup stack carbon nanotubes (CS-CNT). The cup stack carbon nanotubes have a structure like multiple cups placed overlapping one another and have high strength and also flexibility. Thus, especially when the cup stack carbon nanotubes are used as carbon nanotubes to be included in the resin, the repulsion improves and the hitting impression improves.

The carbon nanotube content is preferably equal to or less than 0.4 weight %. When the carbon nanotubes are included in this range, hitting impression can be improved without loss of durability. It is confirmed in the embodiment to be described later that the carbon nanotubes are preferably included in this range.

### === Embodiments ===

### <Sample>

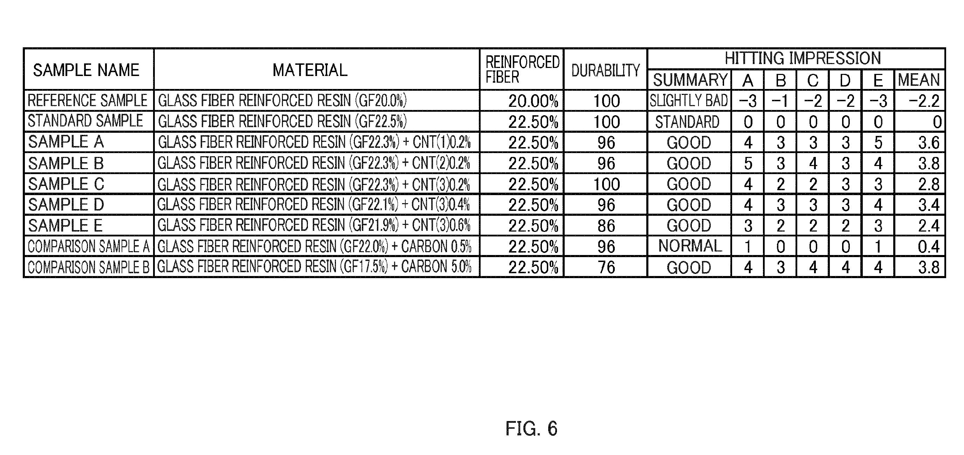

In order to evaluate the durability and the hitting impression of the artificial feather shuttlecock 1, samples (reference sample, standard sample, samples A-E, comparison samples 1, 2) of the artificial feather shuttlecock 1 with different materials for the rachis portion 14 were made. Fig. 6 is a chart showing the materials (and evaluation results) of the samples.

The shape of the artificial feather shuttlecock 1 in each of the samples are as shown in Figs. 1, 2, 4, and 5, and are all the same (the shape, size, and weight and the like of the artificial feather shuttlecock that has not been explained follow the regulations of Nippon Badminton Association Rules). The material of each of the samples are all the same, expect for the material of the rachis portion 14.

The base material (matrix) of the resin to be the material of the rachis portion 14 is the same in all of the samples, and the material is 12 nylon (PA12).

"GF" in the chart refers to glass fibers. "GFn%" in the chart indicates that the content of the glass fibers is n weight%.

The mixing ratio of the reinforced fiber (glass fiber) of the reference sample is 20.0 weight%, and the mixing ratio of the reinforced fiber (glass fiber, carbon fiber, carbon nanotube) of the other samples (standard sample, samples A to E, comparison samples 1, 2) is 22.5 weight%.

"CNT" in the chart refers to carbon nanotubes. "CNT(1)" in the chart is CS-CNT with a functional group (cup stack carbon nanotube, diameter of 50-80nm, length of 0.82-1.08 µm). "CNT(2)" in the chart is MW-CNT with a functional group (multi-walled carbon nanotube, diameter of 8-15nm, length equal to or smaller than 2 µm). "CNT(3)" in the chart is MW-CNT (diameter of 10-15nm, length of 0.1-10µm). The functional group includes at least a carboxyl group and a hydroxyl group and the amount thereof is 1-10 weight%.

Reference Sample: Glass reinforced resin including 20.0 weight% of glass fibers is prepared, the artificial feather 10 having the rachis portion 14 molded with this material is manufactured, and the artificial feather shuttlecock 1 manufactured using this artificial feather 10 is made as a reference sample. The reference sample does not include reinforced fibers other than glass fibers (such as carbon fibers) . Compared with the content of glass fibers in the standard sample (22.5 weight%), the content of glass fiber (20.0 weight%) in the reference sample is small.

Standard Sample: Glass reinforced resin including 22.5 weight% of glass fibers is prepared, the artificial feather 10 having the rachis portion 14 molded with this material is manufactured, and the artificial feather shuttlecock 1 manufactured using this artificial feather 10 is made as a standard sample. The standard sample becomes the standard in evaluating durability and hitting impression.

Sample A: Resin including 22.3 weight% of glass fiber and 0.2 weight% of CS-CNT (with a functional group) is prepared, the artificial feather 10 having the rachis portion 14 molded with this material is manufactured, and the artificial feather shuttlecock 1 manufactured using this artificial feather 10 is made as sample A.

Sample B: Resin including 22.3 weight% of glass fibers and 0.2 weight% of MW-CNT (with a functional group) is prepared, the artificial feathers 10 having the rachis portion 14 molded with this material is manufactured, and the artificial feather shuttlecock 1 manufactured using the artificial feathers 10 is made as sample B.

Sample C: Resin including 22.3 weight% of glass fibers and 0.2 weight% of MW-CNT is prepared, the artificial feathers 10 having the rachis portion 14 molded with this material are manufactured, and the artificial feather shuttlecock 1 manufactured using the artificial feathers 10 is made as sample C.

Samples A to C all use resin including 22.3 weight% of glass fibers and 0.2 weight% of CNT as material of the rachis portion 14. Samples A-C differ from each other in the type of the carbon nanotubes.

Sample D: Resin including 22.1 weight% of glass fibers and 0.4 weight% of MW-CNT is prepared, the artificial feather 10 having the rachis portion 14 molded with this material is manufactured, and the artificial feather shuttlecock 1 manufactured using this artificial feather 10 is made as sample D.

Sample E: Resin including 21.9 weight% of glass fibers and 0.6 weight% of MW-CNT is prepared, the artificial feather 10 having the rachis portion 14 molded with this material is manufactured, and the artificial feather shuttlecock 1 manufactured using this artificial feather 10 is made as sample E.

In samples C-E, resin including glass fibers and MW-CNT is used as the material of the rachis portion 14. Samples C-E differ from each other in content by percentage of MW-CNT.

Comparison Sample A: Resin including 22.0 weight% of glass fibers and 0. 5 weight% of carbon fibers is prepared, the artificial feather 10 having the rachis portion 14 molded with this material is manufactured, and the artificial feather shuttlecock 1 manufactured using this artificial feather 10 is made as comparison sample A.

Comparison Sample B: Resin including 17.5 weight% of glass fibers and 5.0 weight% of carbon fibers is prepared, the artificial feather 10 having the rachis portion 14 molded with this material is manufactured, and the artificial feather shuttlecock 1 manufactured using this artificial feather 10 is made as comparison sample B.

### <Dispersion state>

Fig. 7A is a photograph taken of comparison sample A. Fig. 7B is a photograph taken of sample C (In Fig. 7A and Fig. 7B, however, a white paper is inserted to the inner side of the skirt portion 4 (the plurality of artificial feathers 10 that have been circularly arranged) so that the color of the rachis portion 14 can be grasped from the photograph).

In Fig. 7A (comparison sample A including 0.5 weight% of the carbon fibers), the rachis portion 14 was confirmed to be a gray color. This is a state where the carbon fibers are not sufficiently dispersed over the entire resin, and the amount of the carbon fibers in respect to the resin is not enough (Therefore, as described later on, even though the carbon fibers are included in comparison sample A, the rigidity and repulsion of the rachis portion 14 has not improved, and the hitting impression has not improved.).

On the contrary, in Fig. 7B (sample C including 0.2 weight% of MW-CNT), it is confirmed that the color of the rachis portion 14 is black (In sample A and sample B, the color of the rachis portion 14 is black). The rachis portion 14 is black as a result of black carbon nanotubes being dispersed over the entire resin.

As shown in Fig. 7B, the vane supporting portion 14A of the rachis portion 14 is put between the sheet form vane portions 12 and the sheet form reinforcing material 15. Therefore, the black color of the vane supporting section 14A of the rachis portion 14 cannot be easily visually identified from the outside, and it has been confirmed that the portion of the rachis portion 14 that looks black can be lessened.

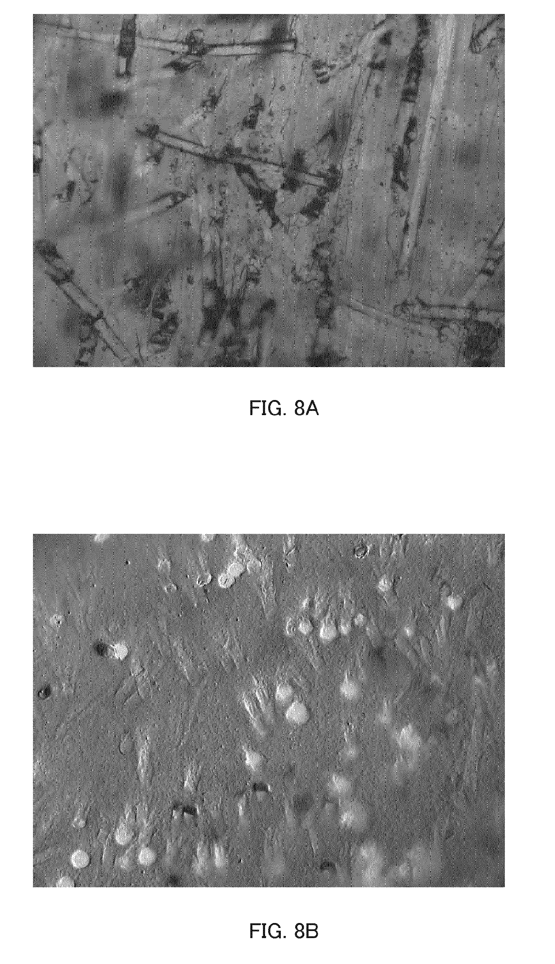

Fig. 8A and Fig. 8B are photomicrographs of a cross section of the rachis portion 14 of sample B. Fig. 8A is a photomicrograph of a section surface, and Fig. 8B is a photomicrograph of the surface after the section surface has been partially melted with a solvent. Fig. 8B can be said as showing the inside state of Fig. 8A, and from this photograph the manner in which the black carbon nanotubes are dispersed in the resin can be seen.

In this way, in the case the carbon nanotubes are included in the resin, even when the carbon nanotubes are an extremely small amount (0.2 weight%) compared with the carbon fibers in the comparison sample, it has been confirmed that the carbon nanotubes disperse over the entire resin.

### <Contact phenomenon between Glass fibers and CNT>

From the photomicrograph of Fig. 8A (sample B including 0.2 weight% of MW-CNT with a functional group), the state in which the carbon nanotubes (the black portion in the photograph) are contacting (sticking to) the periphery of the glass fibers (the elongated transparent member in the photograph) can be seen. In this way, when the carbon nanotubes with the functional group are included, there has been confirmed that the phenomenon in which the carbon nanotubes and the glass fibers come into contact occur.

### <Evaluation Results of Durability and Hitting impression>

Fig. 3 shows evaluation results of durability and hitting impression of the samples.

A durability test was performed by repeating smashes for a predetermined number of times with an initial velocity of over 300 Km/h.

The evaluation of durability was performed by confirming the state of the shuttlecock in every smash hit and converting into numbers the occurrence time of an initial breakage (a state in which the shaft initially breaks). A method is applied in which the state with no breakage after the predetermined number of times of smashes have finished is shown as "100", and in the case where breakage occurs earlier than the predetermined number of times of smashes the rate of the number of smashes when the breakage occurred is shown. This time, the state with no breakage is set as the standard, therefore there is no sample with evaluations exceeding the standard sample.

The base portion 2 used in the evaluated shuttlecock uses natural cork. Natural cork maintains both qualities of lightness and good repulsion, but on the other hand due to natural cork being a natural raw material it has characteristics with a large variability. As a result, even in the case where the same type of rachis portion is used there is an individual variation. Thus, approximately 5% is within the margin of error, and those with an evaluation of durability that is equal to or greater than 96 are in the range with essentially no problems.

Evaluation of hitting impression was performed, with the standard sample as the standard, by five monitors evaluating in five levels respectively to the plus side (good evaluation) or the minus side (bad evaluation). A summary is made from a mean value of the evaluation results of the five monitors. In the summary, the range with the mean value equal to or greater than -5 to -4 or less is set as "very bad", the range with the mean value equal to or greater than -4 to -2.5 or less is set as "bad", the range with the mean value equal to or greater than -2.5 to -1 or less is set as "slightly bad", the range with the mean value equal to or greater than -1 to 1 or less is set as "normal", the range with the mean value equal to or greater than 1 to 2.5 or less is set as "slightly good", the range with the mean value equal to or greater than 2.5 to 4 or less is set as "good", and the range with the mean value equal to or greater than 4 to equal to or less than 5 is set as "very good". Note that, it is also possible to evaluate hitting impression from the mean value of the five evaluation results.

In the reference sample, it was confirmed that the hitting impression was bad (slightly bad). This is considered to be because the amount of reinforced fibers (glass fibers) reinforcing the resin is small, the rigidity and repulsion of the rachis portion 14 became low.

In comparison sample A, compared with the standard sample, it has been confirmed that there was hardly any change in durability and hitting impression. As can be also confirmed from the photograph in Fig. 7A, this is considered to be because the amount of the carbon fibers in respect to the resin is insufficient.

In comparison sample B, it was confirmed that the hitting impression improved. This is considered to be because, as a result of the carbon fibers being sufficiently combined, the rigidity and repulsion of the rachis portion 14 increased. Note that, in comparison sample B it has been confirmed that durability lessened. This is because as a result of the content of the carbon fibers increasing, the rachis portion 14 became easy to break.

Next, samples A-E including the carbon nanotubes are described.

In sample A to sample C, improvement in the hitting impression has been confirmed. Thus, in sample A to sample C, by including an extremely small amount (0.2 weight%) of carbon nanotubes, in contrast to the content (5.0 weight%) of the carbon fibers in comparison sample B, it is confirmed that an improved effect in the hitting impression can be obtained.

In sample A to sample C, deterioration of durability due to including the carbon nanotubes was not confirmed. In other words, in sample A to sample C, hitting impression improved without loss of durability as in comparison sample B.

Especially in sample A and sample B, as compared with sample C, improvement in the hitting impression was significant. Both sample B and sample C include MW-CNT, and both have carbon nanotubes satisfactorily dispersed in the resin (both have black rachis portions 14 as shown in Fig. 7B), and when considering the point that there is a difference in whether or not there is a functional group, it is assumed that the carbon nanotube having the functional group contributes to further improvement in the hitting impression.

In sample B including the MW-CNT with the functional group, the phenomenon that that the carbon nanotubes and the glass fibers of the glass reinforced resin coming into contact has been confirmed, thus it is assumed that this phenomenon contributes to further improvement of the hitting impression. In other words, it is assumed that when the carbon nanotubes have the carboxyl group and the hydroxyl group as the functional group, this contributes to further improvement of the hitting impression.

It was confirmed that sample A including CS-CNT has good hitting impression, as compared with a sample including other types of carbon nanotubes.

In sample C to sample E, improvement in hitting impression was confirmed. In sample C to sample E there was not as much deterioration in durability as in comparison sample B. In other words, it is confirmed in sample A to sample E that the hitting impression improved without loss of durability as compared with comparison sample B.

In sample C and sample D durability has hardly deteriorated, but on the contrary in sample E a slight deterioration in durability has been confirmed. Thus, when considering deterioration of durability, it is assumed that the content of the carbon nanotubes in the material (resin including glass fibers and carbon nanotubes) is preferably equal to or less than 0.4 weight% (note that, the content is more than 0 weight%).

The mean values of the hitting impression of sample C to sample E are high values compared to the standard sample, and sample D had the highest value. Therefore, it is assumed that in the case carbon nanotubes are included to reach 0.4 weight%, hitting impression can be improved in accordance with the content of the carbon nanotubes without loss of durability. It is assumed that when carbon nanotubes are included greater than 0.4 weight%, not only durability but also hitting impression may deteriorate. From these reasons, it is assumed that the content of carbon nanotubes in the material (resin including glass fiber and carbon nanotube) is preferably equal to or less than 0.4 weight%. When the carbon nanotubes in the material (resin including glass fibers and carbon nanotubes) are included in the range of equal to or greater than 0.2 weight% and equal to or less than 0.4 weight%, it has been confirmed that high hitting impression can be achieved without loss of durability.

### === Other Points ===

The above embodiment modes are to facilitate understanding of this invention, and are not for limiting this invention in any way. It is needless to say that this invention can be changed or modified without deviating from the scope, and this invention includes its equivalents.

### [Reference Signs List]

1 artificial feather shuttlecock, 2 base portion, 3 string like member, 4 skirt portion, 10 artificial feather, 12 vane portion, 14 rachis portion, 14A vane support portion, 14B calamus portion, 15 reinforcing material, 30 overlapping area, 40 single area

## Claims

1. An artificial feather for a shuttlecock comprising:
a sheet form vane portion; and a rachis portion supporting the vane portion,
the rachis portion being made of resin including glass fiber and carbon nanotube.

2. The artificial feather for a shuttlecock according to claim 1, wherein
the rachis portion is put in between at least two sheet form members including the vane portion.

3. The artificial feather for a shuttlecock according to claim 1 or 2, wherein
the carbon nanotube includes a functional group.

4. The artificial feather for a shuttlecock according to claim 3, wherein
the carbon nanotube includes at least one of a carboxyl group and a hydroxyl group as the functional group.

5. The artificial feather for a shuttlecock according to any one of claims 1 to 4, wherein
the content of the carbon nanotube in the resin including the glass fiber and the carbon nanotube is equal to or less than 0.4 weight%.

6. A shuttlecock comprising: a base portion; and a plurality of artificial feathers arranged circularly to the base portion, wherein
the artificial feather includes a sheet form vane section and a rachis portion supporting the vane portion,
the rachis portion being formed with resin including glass fiber and carbon nanotube.

7. A manufacturing method of an artificial feather for a shuttlecock comprising a sheet from vane portion and a rachis portion supporting the vane portion,
the rachis portion being formed with resin including glass fiber and carbon nanotube.

8. The method of manufacturing an artificial feather for a shuttlecock according to claim 7, comprising:
preparing a first masterbatch combined with the glass fiber;
preparing a second masterbatch combined with the carbon nanotube; and
forming resin including the glass fiber and the carbon nanotube by mixing the first masterbatch, the second masterbatch, and resin not including the glass fiber and the carbon nanotube.
